# EUROPÄISCHE PATENTSCHRIFT

(11) **EP 2 828 412 B1**
(45) Veröffentlichungstag und Bekanntmachung des Hinweises auf die Patenterteilung: **18.05.2016**
(21) Anmeldenummer: 13720837.7
(22) Anmeldetag: 22.04.2013
(51) Int. Cl.: C21C 7/068, G01B 7/00, C21C 5/32, C21C 5/46, F27D 21/00, F27D 3/16, F27D 19/00

(54) **KONTAKTLOSE POSITIONSMESSUNG EINER BEWEGLICHEN LANZE BEI DER KONVERTERSTAHLERZEUGUNG**
CONTACTLESS POSITION MEASUREMENT OF A MOVABLE LANCE IN CONVERTER STEEL PRODUCTION
MESURE SANS CONTACT DE LA POSITION D'UNE LANCE MOBILE DANS LA PRODUCTION D'ACIER DE CONVERTISSEUR

(30) Priorität: 04.05.2012 AT 5312012
(43) Veröffentlichungstag der Anmeldung: 28.01.2015
(73) Patentinhaber: Primetals Technologies Austria GmbH, 4031 Linz (AT)
(72) Erfinder: HARTL, Franz, A-4020 Linz (AT); KURZMANN, Thomas, A-4614 Marchtrenk (AT)
(74) Vertreter: Metals@Linz
(86) Internationale Anmeldenummer: PCT/EP2013/058259
(87) Internationale Veröffentlichungsnummer: WO 2013/164214

(56) Entgegenhaltungen:
- WO-A1-2006/021066
- DE-A1- 3 103 730
- DE-A1- 3 141 116
- DE-A1-102004 061 944

## Beschreibung

Die Erfindung betrifft ein System umfassend eine bewegliche Lanze, welche zur Messung oder Beeinflussung physikalischer oder chemischer Größen einer Schmelze in einem Konverter vorgesehen ist, und eine Vorrichtung, welche zur kontaktlosen Positionsmessung der beweglichen Lanze vorgesehen ist.

Weiterhin betrifft die Erfindung ein Konvertersystem mit einem derartigen System und ein Verfahren zur kontaktlosen Positionsmessung der beweglichen Lanze.

Ein derartiges System und Konvertersystem sowie ein derartiges Verfahren kommen beispielsweise bei der Konverterstahlerzeugung zum Einsatz. Bei einem Konverter handelt es sich im Zusammenhang mit der Stahlherstellung um ein Behältnis, in welchem beispielsweise durch Zuführung von Sauerstoff in verflüssigtes Roheisen überschüssiger Kohlenstoff herausoxidiert wird.

Bei der Konverterstahlerzeugung werden verschiedene bewegliche Lanzensysteme eingesetzt, wie zum Beispiel Sauerstoffblaselanzen oder Lanzeneinrichtungen zur Probennahme oder zur Bestimmung von Stahlbadtemperatur, des Kohlenstoffgehalts oder der Sauerstoffaktivität, wobei die letztgenannten Lanzeneinrichtungen Sublanzeneinrichtungen genannt werden.

Insbesondere wenn es sich um wassergekühlte Lanzen handelt, ist die sichere Positionsbestimmung der Lanze von großer Wichtigkeit, da bei einer Kollision der wassergekühlten Lanzeneinrichtung mit dem Konvertergefäß Kühlwasser aus der Lanze austreten kann. Ist eine gefährliche Menge Wasser ausgetreten, so kann dies im Konverter zu explosionsartiger Verdampfung (Spontanverdampfung), Dissoziation (Wasseraufspaltung) sowie Oxydationseffekten (chemischer Bindung der Sauertung) sowie Oxydationseffekten (chemischer Bindung der Sauerstoffatome) führen. Das dadurch entstehende Gefahrenpotential ist nicht zu vernachlässigen.

Bisher wurde die Positionsmessung der beweglichen Lanze wie folgt durchgeführt. Die Lanze hängt an dem einem Ende eines Seils, welches am anderen Ende auf einer Seiltrommel aufgewickelt ist. Mit der Seiltrommel ist ein Antriebsmotor verbunden, so dass der Antriebsmotor nach Vorgabe einer verbundenen Steuerung mittels des Seils die Lanze vertikal bewegen kann. Die Positionsmessung wird dabei mittels eines am drehenden Teil der Seiltrommel befestigten Absolutwertencoders realisiert, wobei erst durch entsprechende Berechnung durch die Steuerung die exakte Lanzenposition zugänglich ist. Somit liegt also eine indirekte sowie eine kontaktbehaftete Messung vor.

Die DE 10 2004 061944 A 1 offenbart ein System umfassend eine bewegliche Lanze nach dem Stand der Technik und eine Vorrichtung, welche zur kontaktlosen Positionsmessung mithilfe eines Lichtgitters der beweglichen Lanze vorgesehen ist. Hier wird die Position der Lanze in Abhängigkeit vom Verschleiß berechnet.

Die DE 31 03 730 A 1 offenbart ein ähnliches System, wobei die Position ebenfalls kontaktlos mittels eines Widertandes ermittelt wird.

Der Erfindung liegt die Aufgabe zugrunde, eine möglichst einfache und gleichzeitig möglichst sichere Positionsmessung einer beweglichen Lanze bei der Konverterstahlerzeugung zu ermöglichen.

Diese Aufgabe wird durch ein System der eingangs genannten Art dadurch gelöst, dass das System stationäre Sendemittel zum Aussenden von elektromagnetischen Wellen, stationäre Empfangsmittel zum Empfangen der ausgesendeten elektromagnetischen Wellen, einen Reflektor, welcher mit der beweglichen Lanze verbunden ist und an welchem die elektromagnetischen Wellen reflektierbar sind, und Berechnungsmittel zum Berechnen der absoluten Position der Lanze aus der Laufzeit der von den Sendemitteln in Richtung des Reflektors ausgesendeten, von dem Reflektor in Richtung der Empfangsmittel reflektierten und von den Empfangsmitteln empfangenen elektromagnetischen Wellen aufweist.

Weiterhin wird diese Aufgabe durch ein Konvertersystem der eingangs genannten Art dadurch gelöst, dass das Konvertersystem einen Konverter, ein Seil, an welchem die Lanze hängend befestigt ist, und eine Antriebseinheit, mittels welcher das Seil und die Lanze bewegt werden können, aufweist.

Schließlich wird diese Aufgabe durch ein Verfahren der eingangs genannten Art durch die folgenden Verfahrensschritte gelöst:
- Aussenden von elektromagnetischen Wellen mittels stationären Sendemitteln,
- Empfangen der ausgesendeten elektromagnetischen Wellen mittels stationären Empfangsmitteln,
- Berechnen der absoluten Position der Lanze mittels Berechnungsmitteln aus der Laufzeit der von den Sendemitteln in Richtung eines mit der beweglichen Lanze verbundenen und die elektromagnetischen Wellen reflektierenden Reflektors ausgesendeten, von dem Reflektor in Richtung der Empfangsmittel reflektierten und von den Empfangsmitteln empfangenen elektromagnetischen Wellen.

Das erfindungsgemäße System erlaubt sowohl eine diskrete als auch eine kontinuierliche Lanzenpositionserfassung mit hoher Präzision, so dass auch sicher verhindert werden kann. Dabei ist die Positionsmessung unempfindlich gegen Staub, Rauch und Flammen und kann unabhängig von Temperatur, Luftdruck und Luftfeuchtigkeit durchgeführt werden, wobei im Stahlwerksumfeld der Staub insbesondere graphithaltig, elektrisch leitend und lichtreflektierend sein kann. Besonders im Umfeld der Stahlerzeugung bieten diese Eigenschaften somit große Vorteile.

Gegenüber der bisher im Einsatz befindlichen Einrichtungen zur Lanzenpositionserfassung mit einem an der Seiltrommel angebrachten Absolutwertgeber, welcher lediglich eine indirekte Lanzenpositionserfassung ermöglicht, weist das erfindungsgemäße System den Vorteil der direkten Positionsmessung der Lanze auf. Daran ist besonders vorteilhaft, dass oftmals ungenaue und nur aufwändig oder umständlich zu beschaffende Zusatzinformationen, die für die indirekte Messung mittels des Absolutwertgebers benötigt werden, nicht mehr erforderlich sind. Zu diesen bisher benötigten Zusatzinformationen gehören beispielsweise die Information, wie viele Lagen des Seils schon auf der Seiltrommel aufgewickelt sind sowie die Dicke des Seils, sowie mechanische Eigenschaften des Seils. Zu letztgenannten Eigenschaften zählt die Dehnung des Seils in Abhängigkeit der mechanischen Spannung des Seils, welche wiederum von der Masse der Lanze abhängt.

Erfindungsgemäß ist die Lanze hängend an einem Seil befestigt, wobei das Seil und die Lanze mittels einer Antriebseinheit bewegt werden können. Dabei ist es möglich, dass die Antriebseinheit eine Seiltrommel antreibt, auf welcher das Seil aufgewickelt ist. Das Seil kann dann über eine Umlenkrolle die Lanze in vertikaler Richtung bewegen. Alternativ ist auch denkbar, dass die Antriebseinheit mit einer Treibscheibe verbunden ist, womit die Lanze in vertikaler Richtung, gegebenenfalls auch über eine Umlenkrolle, bewegt werden kann.

Weiterhin kann gegenüber bisher im Einsatz befindlichen Systemen zur Lanzenpositionserfassung eine Vielzahl von Endschaltern entlang der Lanzenführung eingespart werden. Die Endschalter, beispielsweise in Form von Kontaktschaltern oder induktiven Näherungschaltern, dienen bisher zur Detektion, ob die Lanze eine bestimmte Position erreicht hat, und sind deshalb in größerer Anzahl entlang der Lanzenführung angebracht. Zur erfindungsgemäßen, kontaktlosen Positionsbestimmung der Lanze wird die bisher verwendete Vielzahl von Endschaltern nicht mehr benötigt.

Das erfindungsgemäße System ist dank der direkten Positionsmessung der beweglichen Lanze besonders vorteilhaft, weil die oben genannten, schwierig zu beschaffenden und immer mit Fehlern und Toleranzen behafteten Informationen für die bisherige Positionsmessung nicht mehr benötigt werden und eine Vielzahl von Endschaltern entfallen kann. Außerdem ist von Vorteil, dass die Messung kontaktlos durchgeführt wird, da somit beispielsweise kein Verschleiß auftreten kann.

Bei einer vorteilhaften Ausgestaltung der Erfindung sind die elektromagnetischen Wellen Mikrowellen. Die Verwendung von Mikrowellen erlaubt eine besonders zuverlässige Positionsmessung im Umfeld der Stahlerzeugung, da sie besonders unempfindlich gegen Beeinträchtigungen aufgrund von Schmutz und Staub sowie Vibrationen sind. Insbesondere Vibrationen sind bei der Stahlerzeugung unvermeidlich, so dass eine zuverlässige Positionsmessung der Lanze auch bei Auftreten von Vibrationen besonders vorteilhaft ist.

Bei einer weiteren vorteilhaften Ausgestaltung der Erfindung ist die Lanze wassergekühlt. Derartige Lanzen werden zum Beispiel als Sauerstoffblaselanzen oder Lanzeneinrichtungen zur Probennahme oder zur Bestimmung von Stahlbadtemperatur, des Kohlenstoffgehalts oder der Sauerstoffaktivität eingesetzt. Die Kollision der wassergekühlten Lanze mit dem Konverter stellt ein besonders großes Gefahrenpotential dar, so dass die zuverlässige Positionsmessung für derartige Lanzen besonders wichtig ist.

Bei einer weiteren vorteilhaften Ausgestaltung der Erfindung erfüllen die Sendemittel, die Empfangsmittel und die Berechnungsmittel zumindest Sicherheits-Integritätslevel 2 (SIL2). Im Zusammenhang mit der funktionalen Sicherheit ist das Sicherheits-Integritätslevel in der internationalen Normung auch als IEC 61508/IEC61511 bekannt. Das Level an Sicherheit dient der Beurteilung elektrischer, elektronischer bzw. programmierbar elektronischer Systeme in Bezug auf die Zuverlässigkeit von Sicherheitsfunktionen. Aus dem angestrebten Level ergeben sich die sicherheitsgerichteten Konstruktionsprinzipien, die eingehalten werden müssen, damit das Risiko einer Fehlfunktion minimiert werden kann. Wenn zumindest SIL2 erfüllt sein soll, so ist dies so zu verstehen, dass die Anforderungen von SIL2 oder sicherheitstechnisch höherwertigeren Anforderungen erfüllt sein sollen.

Dank des Verwendens von Sendemitteln, Empfangsmitteln und Berechnungsmitteln, welche zumindest SIL2 erfüllen, erfolgt die Positionsmessung der Lanze gemäß zumindest SIL2. Dies kann mittels einer durch IEC 61508/IEC61511 verlangte Risikoanalyse bestätigt werden. Um IEC 61508/IEC61511 zu erfüllen, ist zusätzliche eine zyklische Überprüfung der Vorrichtung zur kontaktlosen Positionsmessung notwendig, wobei die Überprüfung auch manuell durchgeführt werden kann, da die einzuhaltende Zykluszeit ein Jahr beträgt. Die absolute Lanzenposition, beispielsweise einer Sauerstoffblaselanze und von Sublanzen, wird somit mittels eines sicherheitszertifizierten Positionsmesssystems detektiert. Dadurch sind sicherheitstechnische Standards erfüllt, was die gesamte Stahlerzeugungsanlage zuverlässiger macht und im Fall von Störungen zu kürzeren Betriebsausfällen und weniger schlimmen Unfällen führt.

Weiterhin können auch die Antriebseinheit, die Steuerung und gegebenenfalls Kommunikationsbusse derart ausgelegt werden, dass sie zumindest SIL2 erfüllen. Auch weitere Teile des Konvertersystems können nach zumindest SIL2 ausgelegt werden, wie zum Beispiel das Seil oder Trommeln, über welche das Seil umgelenkt wird oder auf welchen das Seil aufgewickelt wird. Somit erhält man ein Konvertersystem, welches insgesamt auch den sicherheitstechnischen Anforderungen von zumindest SIL2 entspricht. Somit sind das System sowie das Konvertersystem auch für den Konverterkippantrieb zum Schwenken des Konvertergefäßes geeignet und die bewegliche Lanze kann mit der Konverterbewegung sicherheitstechnisch verriegelt werden.

Bei einer weiteren vorteilhaften Ausgestaltung der Erfindung ist ein Referenzpunkt vorgesehen, wobei mittels eines zumindest Sicherheits-Integritätslevel 2 (SIL2) erfüllenden Messgeräts eine Kalibrierung der berechneten absoluten Position anhand des Referenzpunkts vornehmbar ist. Das Messgerät ist mit den Berechnungsmitteln verbunden, so dass die durch das Messgerät gemessene Position der Lanze an die Berechnungsmittel übertragen werden kann. Der Referenzpunkt befindet sich vorteilhafterweise entlang der Bewegungsbahn der Lanze, beispielsweise am oberen Ende der Lanzenführung, und ist stationär in Bezug auf das Konvertergefäß und die Lanze, so dass er einen festen Bezugspunkt zu den Sendemitteln und den Empfangsmitteln darstellt.

Durch das Messgerät, welches die Anforderungen von zumindest SIL2 erfüllt, kann dank des Referenzpunkts eine Kalibrierung oder Referenzierung des Positionssignals erfolgen, welche ebenfalls die Anforderungen von zumindest SIL2 erfüllt. Durch die Kalibrierung oder Referenzierung des Positionssignals ist eine zyklische Überprüfung der Vorrichtung zur kontaktlosen Positionsmessung möglich. Dabei ist von Vorteil, dass die Zykluszeit sehr kurz gehalten werden kann, so dass eine automatisierte beispielsweise mehrmals am Tag bzw. mehrmals pro Stunde durchgeführte Referenzierung ermöglicht wird. Dadurch ist keine manuelle Vermessung der Lanze mehr nötig, bei der die gemessene Position den Berechnungsmitteln manuell zugeführt werden müssten.

Somit erfolgt die Positionsbestimmung der beweglichen Lanze zweikanalig, wodurch zusätzlich die Kategorie 3 nach der Norm EN ISO 13849-1 erfüllt wird. In Bezug auf die Positionsbestimmung bedeutet dies, dass ein einzelner Fehler nicht zum Ausfall der Sicherheitsfunktionen führt und dass bei vorliegen eines Fehlers der Fehler vor der nächsten Anforderung der Sicherheitsfunktionen erkannt wird. Durch erfüllen der beiden zuvor genannten Normen wird somit das Erreichen eines besonders hohen Sicherheitsstandards ermöglicht.

Das Messgerät kann insbesondere als Sensor oder Endschalter, beispielsweise in Form eines Kontaktschalters oder eines induktiven Näherungschalters, ausgeführt sein.

Im Folgenden wird die Erfindung anhand des in der Figur dargestellten Ausführungsbeispiels näher beschrieben und erläutert. Es zeigt:

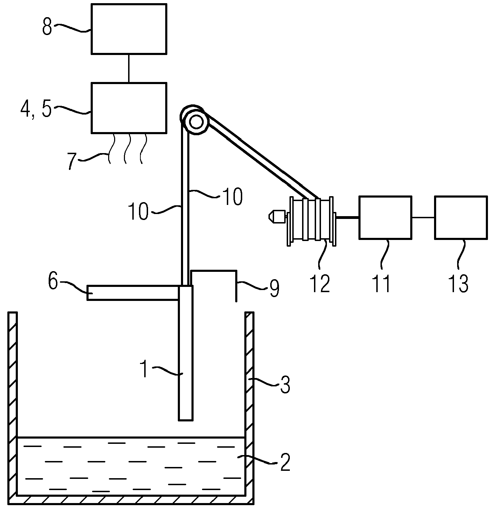

- FIG 1: ein Ausführungsbeispiel eines erfindungsgemäßen Systems und eines erfindungsgemäßen Konvertersystems.

Figur 1 zeigt ein Ausführungsbeispiel eines erfindungsgemäßen Systems und eines erfindungsgemäßen Konvertersystems. In einem Konverter 3 befindet sich eine Schmelze 2. Physikalische oder chemische Eigenschaften der Schmelze 2 können durch eine in den Konverter 3 ragende Lanze 1 gemessen und / oder beeinflusst werden. Die Lanze 1 weist im Rahmen des Ausführungsbeispiels eine Kühlwasserversorgung 9 auf, so dass es sich um eine wassergekühlte Lanze 1 handelt.

An der Lanze 1 ist ein Reflektor 6 in Form einer metallischen Platte angebracht, welche elektromagnetische Wellen 7 reflektieren kann, welche von Sendemitteln 4 in Richtung des Reflektors 6 ausgesandt werden. Die reflektierten elektromagnetischen Wellen 7 können von Empfangsmitteln 5 empfangen werden, wobei sowohl die Sendemittel 4 als auch die Empfangsmittel 5 mit Berechnungsmitteln 8 verbunden sind, welche die absoluten Position der Lanze 1 aus der Laufzeit der von den Sendemitteln 4 in Richtung des Reflektors 6 ausgesendeten, von dem Reflektor 6 in Richtung der Empfangsmittel 5 reflektierten und von den Empfangsmitteln 5 empfangenen elektromagnetischen Wellen 7 berechnen können.

Die Lanze 1 hängt an zwei Seilen 10, welche beispielsweise über eine Umlenkrolle mit einer Seiltrommel 12 verbunden und auf dieser aufgewickelt sind. Die Seiltrommel 12 und damit die Seile 10 sowie die Lanze 1 können mittels einer Antriebseinheit 11 bewegt werden, welche wiederum mit einer Steuerung 13 verbunden ist. Alternativ für die Seiltrommel 12 kann auch beispielsweise eine Treibscheibe verwendet werden.

Nicht dargestellt sind ein Referenzpunkt sowie ein zusätzliches Messgerät, mittels derer eine Kalibrierung der berechneten absoluten Position der Lanze 1 vornehmbar ist. Im Rahmen des Ausführungsbeispiels befindet sich der Referenzpunkt innerhalb des Bewegungsintervalls der beweglichen Lanze am oberen Ende der Lanzenführung, in unmittelbarer Nähe der Umlenktrommel. Das Messgerät ist mit den Berechnungsmitteln 8 verbunden, so dass die gemessene Position des Messgeräts an die Berechnungsmittel 8 übertragen werden kann. Eine manuelle Vermessung der Lanze 1 würde manuell eingetragen werden müssen.

Zusammenfassend betrifft die Erfindung ein System umfassend eine bewegliche Lanze, welche zur Messung oder Beeinflussung physikalischer oder chemischer Größen einer Schmelze in einem Konverter vorgesehen ist, und eine Vorrichtung, welche zur kontaktlosen Positionsmessung der beweglichen Lanze vorgesehen ist. Weiterhin betrifft die Erfindung ein Konvertersystem mit einem derartigen System und ein Verfahren zur kontaktlosen Positionsmessung der beweglichen Lanze. Um eine möglichst einfache und gleichzeitig möglichst sichere Positionsmessung einer beweglichen Lanze bei der Konverterstahlerzeugung zu ermöglichen, wird vorgeschlagen, dass das System stationäre Sendemittel zum Aussenden von elektromagnetischen Wellen, stationäre Empfangsmittel zum Empfangen der ausgesendeten elektromagnetischen Wellen, einen Reflektor, welcher mit der beweglichen Lanze verbunden ist und an welchem die elektromagnetischen Wellen reflektierbar sind, und Berechnungsmittel zum Berechnen der absoluten Position der Lanze aus der Laufzeit der von den Sendemitteln in Richtung des Reflektors ausgesendeten, von dem Reflektor in Richtung der Empfangsmittel reflektierten und von den Empfangsmitteln empfangenen elektromagnetischen Wellen aufweist.

## Patentansprüche

1. System umfassend eine bewegliche Lanze, welche zur Messung oder Beeinflussung physikalischer oder chemischer Größen einer Schmelze in einem Konverter vorgesehen ist, und eine Vorrichtung, welche zur kontaktlosen Positionsmessung der beweglichen Lanze vorgesehen ist, mit
- stationären Sendemitteln zum Aussenden von elektromagnetischen Wellen,
- stationären Empfangsmitteln zum Empfangen der ausgesendeten elektromagnetischen Wellen,
- einem Reflektor, welcher mit der beweglichen Lanze verbunden ist und an welchem die elektromagnetischen Wellen reflektierbar sind, und
- Berechnungsmitteln zum Berechnen der absoluten Position der Lanze aus der Laufzeit der von den Sendemitteln in Richtung des Reflektors ausgesendeten, von dem Reflektor in Richtung der Empfangsmittel reflektierten und von den Empfangsmitteln empfangenen elektromagnetischen Wellen.

2. System nach Anspruch 1,
wobei die elektromagnetischen Wellen Mikrowellen sind.

3. System nach einem der vorhergehenden Ansprüche,
wobei die Lanze wassergekühlt ist.

4. System nach einem der vorhergehenden Ansprüche,
wobei die Sendemittel, die Empfangsmittel und die Berechnungsmittel zumindest Sicherheits-Integritätslevel 2 (SIL2) erfüllen.

5. System nach einem der vorhergehenden Ansprüche,
wobei ein Referenzpunkt vorgesehen ist,
wobei mittels eines zumindest Sicherheits-Integritätslevel 2 (SIL2) erfüllenden Messgeräts eine Kalibrierung der berechneten absoluten Position anhand des Referenzpunkts vornehmbar ist.

6. Konvertersystem mit
- einem System nach einem der vorhergehenden Ansprüche,
- einem Konverter,
- einem Seil, an welchem die Lanze hängend befestigt ist, und
- einer Antriebseinheit, mittels welcher das Seil und die Lanze bewegt werden können.

7. Verfahren zur kontaktlosen Positionsmessung einer beweglichen Lanze, welche zur Messung oder Beeinflussung physikalischer oder chemischer Größen einer Schmelze in einem Konverter vorgesehen ist, mit den Verfahrensschritten:
- Aussenden von elektromagnetischen Wellen mittels stationären Sendemitteln,
- Empfangen der ausgesendeten elektromagnetischen Wellen mittels stationären Empfangsmitteln,
- Berechnen der absoluten Position der Lanze mittels Berechnungsmitteln aus der Laufzeit der von den Sendemitteln in Richtung eines mit der beweglichen Lanze verbundenen und die elektromagnetischen Wellen reflektierenden Reflektors ausgesendeten, von dem Reflektor in Richtung der Empfangsmittel reflektierten und von den Empfangsmitteln empfangenen elektromagnetischen Wellen.

8. Verfahren nach Anspruch 7,
wobei eine Kalibrierung der berechneten absoluten Position anhand eines Referenzpunkts mittels eines zumindest Sicherheits-Integritätslevel 2 (SIL2) erfüllenden Messgeräts vorgenommen wird.

## Claims

1. System comprising a movable lance which is intended for measuring or influencing physical or chemical quantities of a melt in a converter, and an apparatus which is intended for contactless position measurement of the movable lance, with
- stationary transmitting means for transmitting electromagnetic waves,
- stationary receiving means for receiving the transmitted electromagnetic waves,
- a reflector which is connected to the movable lance and at which the electromagnetic waves are able to be reflected, and
- computation means for computing the absolute position of the lance from the propagation time of the electromagnetic waves transmitted by the transmitting means in the direction of the reflector, reflected by the reflector in the direction of the receiving means and received by the receiving means.

2. System according to claim 1,
wherein the electromagnetic waves are microwaves.

3. System according to one of the preceding claims,
wherein the lance is water-cooled.

4. System according to one of the preceding claims,
wherein the transmitting means, the receiving means and the computation means fulfil at least safety integrity level 2 (SIL2).

5. System according to one of the preceding claims,
wherein a reference point is provided,
wherein a calibration of the computed absolute position by means of a measurement device fulfilling at least safety integrity level 2 (SIL2) is able to be carried out on the basis of the reference point.

6. Converter system with
- a system according to one of the preceding claims,
- a converter,
- a cable from which the lance is suspended, and
- a drive unit by means of which the cable and the lance can be moved.

7. Method for contactless position measurement of a movable lance, which is intended for measuring or influencing physical or chemical variables of a melt in a converter, with the following method steps:
- Transmitting of electromagnetic waves by means of stationary transmitting means,
- Receiving of the transmitted electromagnetic waves by means of stationary receiving means,
- Computation of the absolute position of the lance by means of computation means from the propagation time of the electromagnetic waves transmitted by the transmitting means in the direction of a reflector connected to the movable lance and reflecting the electromagnetic waves, reflected by the reflector in the direction of the receiving means and received by the receiving means.

8. Method according to claim 7,
wherein a calibration of the computed absolute position is undertaken on the basis of a reference point by means of a measurement device fulfilling at least safety integrity level 2 (SIL2).

## Revendications

1. Système comprenant une lance mobile, laquelle est prévue pour la mesure ou l'influence de grandeurs physiques ou chimiques d'une matière fondue dans un convertisseur, et un dispositif, lequel est prévu pour la mesure de position sans contact de la lance mobile, avec
- des moyens d'émission fixes permettant l'émission d'ondes électromagnétiques,
- des moyens de réceptions fixes permettant la réception des ondes électromagnétiques émises,
- un réflecteur, lequel est relié à la lance mobile et au niveau duquel les ondes magnétiques peuvent être reflétées, et
- des moyens de calcul permettant de calculer la position absolue de la lance à partir de la durée de vie des ondes électromagnétiques émises par les moyens d'émission dans la direction du réflecteur, reflétées par le réflecteur dans la direction des moyens de réception et reçues par les moyens de réception.

2. Système selon la revendication 1,
dans lequel les ondes électromagnétiques sont des micro-ondes.

3. Système selon l'une des revendications précédentes,
dans lequel la lance est refroidie à l'eau.

4. Système selon l'une des revendications précédentes,
dans lequel les moyens d'émission, les moyens de réception et les moyens de calcul satisfont au moins au niveau d'intégrité de sécurité 2 (SIL2).

5. Système selon l'une des revendications précédentes,
dans lequel un point de référence est prévu,
dans lequel au moyen d'un appareil de mesure satisfaisant au moins au niveau d'intégrité de sécurité 2 (SIL2) un étalonnage de la position absolue calculée peut être opéré à l'aide du point de référence.

6. Système convertisseur avec
- un système selon l'une des revendications précédentes,
- un convertisseur,
- un câble, au niveau duquel la lance peut être fixée et suspendue, et
- une unité d'entraînement, au moyen de laquelle le câble et la lance peuvent être mis en mouvement.

7. Procédé permettant la mesure de position sans contact d'une lance mobile, laquelle est prévue pour la mesure ou l'influence de grandeurs physiques ou chimiques d'une matière fondue dans un convertisseur, avec les étapes de procédé suivantes :
- émission d'ondes électromagnétiques au moyen de moyens d'émission fixes,
- réception des ondes électromagnétiques émises au moyen de moyens de réception fixes,
- calcul de la position absolue de la lance au moyen de moyens de calcul à partir de la durée de vie des ondes électromagnétiques émises par les moyens d'émission dans la direction d'un réflecteur relié à la lance mobile et reflétant les ondes électromagnétiques, reflétées par le réflecteur dans la direction des moyens de réception et reçues par les moyens de réception.

8. Procédé selon la revendication 7,
dans lequel un étalonnage de la position absolue calculée à l'aide d'un point de référence est entrepris au moyen d'au moins un appareil de mesure satisfaisant au niveau de sécurité d'intégrité 2 (SIL2).
